# FASCICULE DE BREVET EUROPEEN

(11) **EP 3 550 988 B1**
(45) Date de publication et mention de la délivrance du brevet: **23.12.2020**
(21) Numéro de dépôt: 17812021.8
(22) Date de dépôt: 22.11.2017
(51) Int. Cl.: A23G 9/04, A23G 9/08, A23G 9/22, A47J 19/00

(54) **DISPOSITIF POUR LA REALISATION DE PREPARATIONS ALIMENTAIRES GLACEES ET APPAREIL EQUIPE D'UN TEL DISPOSITIF**
VORRICHTUNG ZUR HERSTELLUNG VON GEFRORENEN LEBENSMITTELZUBEREITUNGEN UND MIT SOLCH EINER VORRICHTUNG AUSGESTATTETE EINRICHTUNG
DEVICE FOR PRODUCING ICED FOOD PREPARATIONS AND APPARATUS EQUIPPED WITH SUCH A DEVICE

(30) Priorité: 08.12.2016 FR 1662171
(43) Date de publication de la demande: 16.10.2019
(73) Titulaire: SEB S.A., 69130 Ecully (FR)
(72) Inventeur: LE GRAND, Olivier, 21380 Messigny et Vantoux (FR)
(74) Mandataire: SEB Développement
(86) Numéro de dépôt international: PCT/FR2017/053212
(87) Numéro de publication internationale: WO 2018/104608

(56) Documents cités:
- CN-B- 103 380 848
- US-A- 3 976 001
- US-A- 4 906 486
- US-A1- 2012 048 977
- US-B2- 7 028 607

## Description

### Domaine technique

La présente invention se rapporte au domaine des appareils pour la réalisation de préparations alimentaires, tout particulièrement les préparations alimentaires glacées. L'invention porte plus précisément sur un dispositif pour la réalisation de préparations alimentaires glacées, équipant un tel un appareil. La portée de l'invention est définie par les revendications.

### Etat de la technique

Les appareils permettant la réalisation de préparations alimentaires glacées sont déjà connus. On citera notamment les documents US2345683, US3976001, US7028607, EP2611344, CN103168908 et CN103380848.

Traditionnellement, un tel appareil comprend une base munie d'un système d'entraînement en rotation et un dispositif de préparations alimentaires glacées muni d'un boitier dans lequel est logé un rotor entraîné en rotation par le système d'entraînement, le rotor comprenant un organe de broyage sur l'une de ses faces. Dans les documents US2345683, US3976001, US7028607 et CN103380848, l'organe de broyage est sur le contour cylindrique du rotor, tandis dans les documents EP2611344 et CN103168908 l'organe de broyage est sur le contour conique du rotor.

En outre, selon ces documents US2345683, US3976001, US7028607, EP2611344, CN103168908 et CN103380848, le dispositif de préparations alimentaires glacées comprend une goulotte d'acheminement munie d'un orifice de sortie configuré pour déboucher sur le contour cylindrique ou conique du rotor muni de l'organe de broyage. L'introduction des aliments glacés s'effectue par la goulotte d'acheminement, perpendiculairement à ce contour cylindrique ou conique, excepté pour le document US7028607 qui prévoit une inclinaison de la goulotte d'acheminement par rapport audit contour cylindrique.

Ces diverses mises en œuvre génèrent des copeaux d'aliments glacés plus ou moins grossiers. La qualité des préparations alimentaires glacées n'est donc pas optimale et ne permet donc pas la réalisation de crèmes de fruits glacés de type sorbet qui nécessitent d'obtenir un effet compact et onctueux suite au broyage.

### Résumé de l'invention

La présente invention a pour principal objectif de pallier l'inconvénient précité. A cet effet, l'invention porte sur un dispositif pour la réalisation de préparations alimentaires glacées, lequel comprend un boîtier et un rotor. Le boîtier est configuré pour recevoir le rotor et définir une chambre d'homogénéisation autour du rotor.

Le rotor est configuré pour être entraîné en rotation dans le boîtier selon un axe de rotation, grâce à un système d'entraînement mis en œuvre sur un appareil pour la réalisation de préparations alimentaires.

En outre, ledit rotor comprend deux faces sécantes comprenant chacune un organe de broyage agencé en saillie.

Par ailleurs, le dispositif comprend une goulotte d'acheminement comprenant un orifice de sortie configuré pour déboucher simultanément sur les deux faces sécantes du rotor, dans la chambre d'homogénéisation.

Ainsi, les aliments glacés pénètrent dans la chambre d'homogénéisation et sont attaqués concomitamment par les deux organes de broyage sur les deux faces sécantes du rotor, selon des angles d'attaque différents, ce qui permet d'affiner de manière remarquable les copeaux d'aliments glacés.

Cela permet en outre de répartir les copeaux d'aliments glacés broyés dans toute la chambre d'homogénéisation durant le broyage, ce qui assure un meilleur brassage desdits copeaux dans la chambre d'homogénéisation.

Cette mise en œuvre permet en outre de réduire de manière significative la taille du rotor et de la chambre d'homogénéisation.

Selon le dispositif objet de l'invention, l'organe de broyage sur chaque face est constitué d'au moins une lame assujettie à ladite face. De préférence, chaque organe de broyage comprend des dents portées par l'au moins une lame, ce qui permet de réduire de manière optimale la taille de copeaux d'aliments glacés lors du broyage.

Selon une réalisation du dispositif objet de l'invention, l'orifice de sortie de la goulotte d'acheminement débouche sur une face terminale et sur une face latérale du rotor. On pourrait toutefois envisager une variante de réalisation dans laquelle le rotor est conique et comprend deux faces sur le contour conique, voire plus de deux faces, lesdites faces comprenant chacune un organe de broyage et étant sécantes au sommet du cône, ledit orifice de sortie débouchant sur le sommet du cône de sorte que les aliments glacés introduits dans la goulotte sont attaqués simultanément par tous les organes de broyage dès leur entrée dans la chambre d'homogénéisation.

De préférence, selon cette réalisation du dispositif, le rotor est cylindrique et comporte un axe de révolution confondu avec son axe de rotation. La face terminale est constituée par la surface d'extrémité perpendiculaire à l'axe de révolution et la face latérale est constituée par la surface périphérique cylindrique (le contour cylindrique).

Selon le dispositif objet de l'invention, le rotor comprend un système d'accouplement configuré pour coopérer avec un système d'entrainement en rotation sur une base d'un appareil pour la réalisation de préparations alimentaires.

En outre, le dispositif objet de l'invention comprend un système de fixation configuré pour coopérer avec un système de fixation complémentaire sur ladite base de l'appareil et permettre un assemblage amovible entre lesdits éléments.

Cela permet de monter/démonter le dispositif vis-à-vis de l'appareil, ce dernier pouvant disposer de plusieurs accessoires qui peuvent être rapportés sur la base selon les besoins, par exemple des accessoires pour mélanger ou mixer des aliments non congelés, en complément d'un accessoire constitué du dispositif selon l'invention.

De préférence, selon l'invention, l'axe de rotation du rotor est agencé verticalement lorsque le dispositif est monté sur l'appareil de préparations alimentaires. Une inclinaison de cet axe reste toutefois envisageable, selon la forme de l'appareil.

Selon une réalisation du dispositif objet de l'invention, la goulotte d'acheminement est agencée de manière oblique par rapport à l'axe de rotation du rotor. Cette mise en œuvre sera préférée notamment lorsque le rotor comprend une face terminale et une face latérale munies chacune de l'organe de broyage, en particulier lorsque le rotor est cylindrique. On pourrait toutefois envisager que la goulotte d'acheminement soit agencée dans le sens de l'axe de révolution du rotor, notamment dans une variante où le rotor serait conique avec les faces portant les organes de broyage disposées sur le contour conique dudit rotor, lesdites faces étant sécantes au sommet du cône.

Selon l'invention, le dispositif comprend un conduit d'extraction de la préparation alimentaire glacée. Ce conduit d'extraction est configuré pour communiquer avec la chambre d'homogénéisation. Cela permet la réception de la préparation alimentaire glacée directement dans un récipient disposé à l'extrémité du conduit d'extraction. De préférence, le conduit d'extraction est agencé sur un contour latéral du boîtier pour plus de commodité et une meilleure ergonomie de l'appareil sur le plan de travail (accessibilité et disposition de l'appareil et des ustensiles sur le plan de cuisine ou de table). Des variantes sont toutefois envisageables, notamment une extraction par le fond du boîtier.

Dans une réalisation préférentielle du dispositif selon l'invention, le conduit d'extraction comprend un embout et un orifice d'extraction sur le boîtier. En outre, un système d'emboitement est agencé entre l'embout et le boîtier pour assembler de manière amovible ledit embout en le faisant communiquer avec l'orifice d'extraction lors de l'assemblage.

De préférence, le dispositif selon l'invention comprend plusieurs embouts dont les sections de passage présentent des configurations différentes de sorte à extraire les préparations alimentaires glacées avec des textures différentes. En effet, le changement de section de passage sur les embouts permet de broyer les aliments congelés sous une pression plus ou moins élevée dans la chambre d'homogénéisation et de modifier le temps de malaxage des aliments congelés broyés dans ladite chambre.

Selon le dispositif objet de l'invention, celui-ci comprend un socle et un système d'assemblage amovible agencé entre le socle et le boîtier. Le désassemblage du boîtier et du socle permet le dégagement du rotor, notamment pour le nettoyage du rotor, de la chambre d'homogénéisation et de la goulotte d'acheminement après chaque utilisation.

Selon l'invention, le dispositif comprend un poussoir configuré pour être engagé dans la goulotte d'acheminement et pour coulisser dans celle-ci, de sorte à exercer une pression sur les aliments congelés durant leur pénétration dans la chambre d'homogénéisation et leur broyage.

De préférence, le dispositif comprend un système de raclage agencé entre la goulotte d'acheminement et le poussoir. Cela permet de racler les aliments qui restent collés au poussoir de sorte à éviter les remontées d'aliments dans la goulotte d'acheminement durant les mouvements de va-et-vient du poussoir dans celle-ci pour l'introduction d'autres aliments congelés à broyer. On évite ainsi tout débordement d'aliments congelés broyés par ladite goulotte d'acheminement. Le système de raclage peut être mis en œuvre sur le contour intérieur de la goulotte d'acheminement ou sur le contour extérieur du poussoir, voire simultanément sur les deux.

Selon le dispositif objet de l'invention, la goulotte d'acheminement comprend un orifice d'entrée pour l'introduction des aliments glacés. En outre, la goulotte d'acheminement comprend une forme évasée en direction de l'orifice d'entrée.

L'invention concerne également un appareil pour la réalisation de préparations alimentaires, lequel comprend une base munie d'un système d'entraînement en rotation et un dispositif selon l'invention présentant l'une et/ou l'autre des caractéristiques précitées. Le système d'entraînement en rotation permet l'entraînement en rotation du rotor du dispositif selon son axe de rotation.

De préférence, l'appareil selon l'invention permet la réception de plusieurs accessoires, par exemple des dispositifs pour mélanger ou mixer des aliments non congelés en complément du dispositif selon l'invention. Pour cela, la base de l'appareil comprend un système de fixation complémentaire à un système de fixation sur le dispositif, ce qui permet d'assembler de manière amovible lesdits éléments. Ce système de fixation complémentaire permet également la réception sur la base de tous les accessoires qui sont équipés d'un système de fixation complémentaire comparable à celui dudit dispositif.

### Brève description des figures

Les caractéristiques et avantages de la présente invention apparaîtront à la lecture de la description suivante d'un mode de réalisation préférentiel et non limitatif s'appuyant sur des figures, parmi lesquelles :
- La figure 1 illustre une vue d'ensemble d'un dispositif pour la réalisation de préparations alimentaires glacées selon l'invention ;
- La figure 2 illustre une vue en coupe de la figure 1, mettant en évidence les éléments intérieurs dudit dispositif ;
- Les figures 3 et 4 mettent en évidence le boîtier et la goulotte d'acheminement ;
- Les figures 5 à 8 mettent en évidence une conception préférentielle du rotor et des organes de broyage ;
- Les figures 9 et 10 illustrent un socle conçu pour être assemblé sous le boîtier et pour être assemblé avec la base d'un appareil pour la réalisation de préparations alimentaires ;
- La figure 11 illustre une réalisation préférentielle d'un poussoir ;
- La figure 12 illustre une réalisation d'un embout mis en œuvre sur un conduit d'extraction ;
- Les figures 13 à 20 illustrent de manière non limitative différentes sections de passage sur un tel embout.

### Description détaillée

Dans la description qui suit, les mêmes références sont utilisées pour décrire les caractéristiques identiques ou similaires selon les différentes variantes de réalisation.

En outre, dans la suite de la description et sauf indication contraire :
- le terme « dispositif » définit le dispositif pour la réalisation de préparations alimentaires glacées objet de l'invention,
- le terme « appareil » désigne l'appareil pour la réalisation de préparations alimentaires selon l'invention,
- le terme « goulotte » désigne la goulotte d'acheminement
- le terme « chambre » désigne la chambre d'homogénéisation.

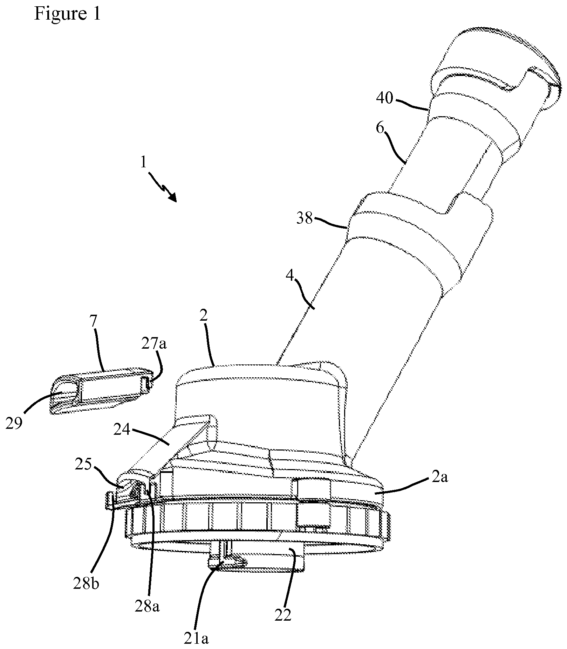

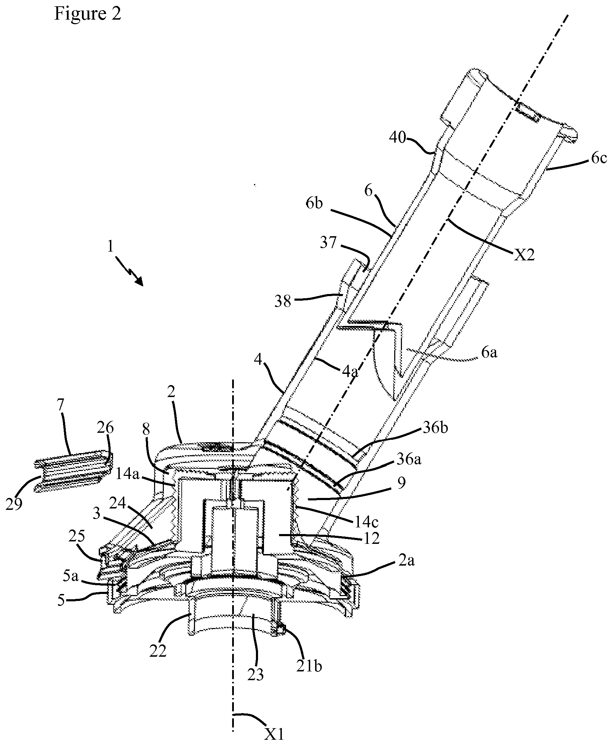

Sur les figures 1 et 2, le dispositif 1 comprend un boîtier 2, un rotor 3, une goulotte 4, un socle 5, un poussoir 6 et un embout 7. Le boîtier 2 et la goulotte 4 sont préférentiellement formés d'une seule pièce.

Le boîtier 2 définit une chambre 8 qui est plus ou moins cylindrique et qui communique avec un orifice de sortie 9 sur la goulotte 4, comme l'illustrent les figures 1 à 4.

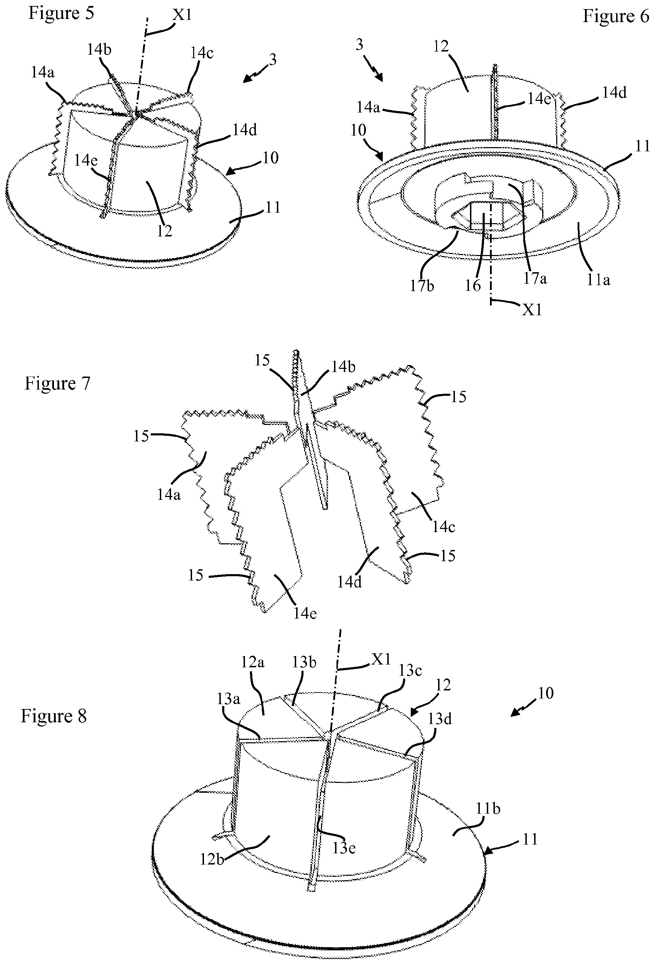

La conception du rotor 3 apparaît notamment au regard des figures 5 à 8. Le rotor 3 comporte un corps 10 qui présente une forme de révolution selon son axe de révolution X1. Le corps 10 comprend une embase 11 et un cylindre 12. Ce cylindre 12 définit une face d'extrémité 12a et une face périphérique 12b sécantes entre elles. Cinq saignées 13a-13e s'étendent longitudinalement sur la face périphérique 12b puis radialement sur la face d'extrémité 12a, jusque l'axe de révolution X1, lesdites saignées étant uniformément réparties autour de l'axe de révolution X1, comme l'illustre la figure 8. Ces cinq saignées 13a-13e reçoivent respectivement cinq lames 14a-14e, comme l'illustrent les figures 5 et 6. Ces lames 14a-14e ont une forme en équerre et sont munies de dents 15, comme l'illustre la figure 7. Lorsque les lames 14a-14e sont logées dans les saignées 13a-13e, celles-ci sont en saillie sur la face d'extrémité 12a et la face périphérique 12b. On pourrait envisager un nombre de saignées et de lames différent de cinq avec, de préférence, une répartition homogène autour du corps 10.

Tel qu'illustré en figure 2, l'orifice de sortie 9 de la goulotte 4 donne directement sur les deux faces 12a, 12b du corps 10 et, par conséquent, sur les lames 14a-14e en équerre. L'axe de révolution X1 du rotor 3 est disposé plus ou moins verticalement, tandis que la goulotte 4 comporte un axe X2 de révolution qui est incliné par rapport à l'axe de révolution X1, par exemple d'un angle α compris entre 30° et 50°, de préférence 30°.

L'embase 11 du corps 10 comprend sur sa face inférieure 11a un trou 16 de forme hexagonale, tel qu'illustré en figure 6, configuré pour être accouplé par emboîtement avec une tête hexagonale (non illustrée) entraînée en rotation par un moteur (non illustré) sur une base (non illustrée) d'un appareil (non illustré). Sur cette face inférieure 11a sont également mises en œuvre deux encoches 17a, 17b autour du trou 16, lesdites encoches 17a, 17b étant configurées pour recevoir deux pattes (non illustrées) de forme complémentaire aux encoches 17a, 17b, ces pattes étant agencées autour de ladite tête hexagonale sur la base de l'appareil. Cela permet de réaliser une fixation par quart-de-tour entre le rotor 3 et le système d'entraînement de l'appareil. Ledit système d'entraînement permet la rotation du rotor 3 selon son axe de révolution X1.

Tel que l'illustrent les figures 1 à 4, 9 et 10, le socle 5 est amovible du boîtier 2. Pour cela, le contour externe inférieur 2a du boîtier 2 comprend un filetage 18 et le contour interne supérieur 5a du socle 5 comprend un taraudage 19, ce qui permet de visser le socle 5 sur le boîtier 2. Lorsque le cylindre 12 du rotor 3 est introduit dans la chambre 8, la face supérieure 11b de l'embase 11 vient en butée contre le boîtier 2. Ainsi, l'embase 11 est emprisonnée entre le boîtier 2 et le socle 5 une fois ce dernier vissé sur le boîtier 2. Le dévissage du socle 5 permet au contraire l'extraction du rotor 3 pour son nettoyage ainsi que celui de la chambre 8 et de la goulotte 4. La face supérieure 11b de l'embase 11 est préférentiellement de forme convexe plutôt que concave afin de limiter les zones dites « mortes » à l'intérieur du boîtier 2.

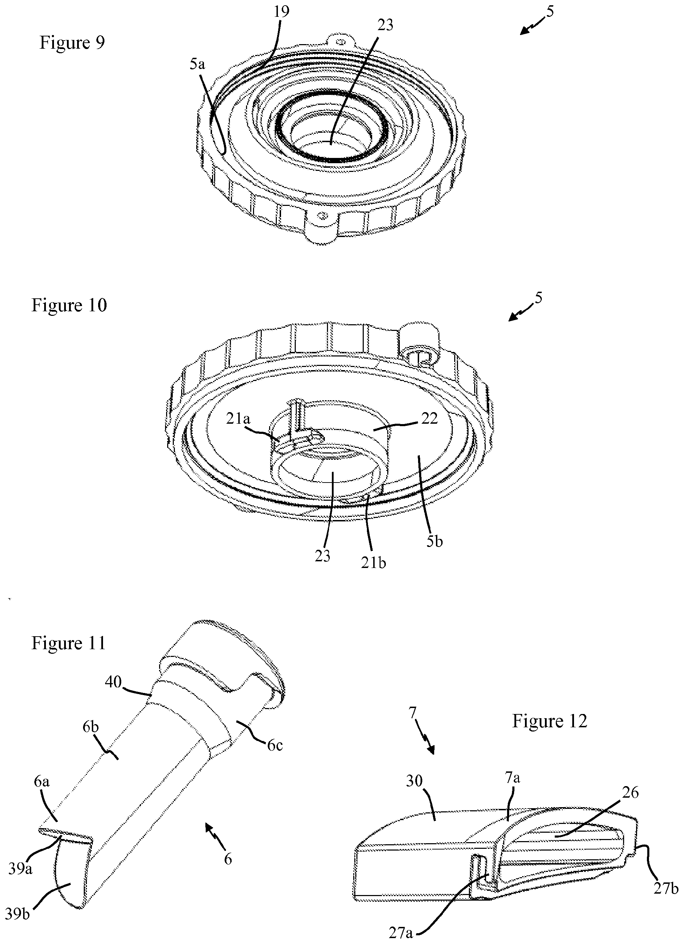

Tel qu'illustré en figure 10, la face inférieure 5b du socle 5 comprend une portion cylindrique 22 munie de deux pattes de fixation 21a, 21b qui sont configurées pour s'accoupler avec deux logements de fixation complémentaires (non illustrés) agencés sur la base de l'appareil (non illustrée), ce qui permet de fixer le dispositif 1 sur l'appareil (non illustré). Le socle 5 comprend une ouverture 23 qui permet l'accès aux encoches 17a, 17b et au trou 16 sur la face inférieure 11a du rotor 3, pour effectuer son accouplement avec le système d'entraînement (non illustré) de l'appareil (non illustré).

Tel qu'illustré en regard des figures 1 à 4 et 12, un conduit d'extraction 24 est mis en œuvre sur le boîtier 2, ce conduit d'extraction 24 communiquant avec la chambre 8 et débouchant sur un orifice d'extraction 25 sur le contour externe inférieur 2a dudit boîtier 2. L'embout 7 constitue un conduit d'extraction 30 complémentaire au conduit d'extraction 24 sur le boîtier 2. Pour cela, l'embout 7 comprend à son extrémité amont 7a une ouverture d'entrée 26 et deux pattes 27a, 27b. Ces pattes 27a, 27b s'engagent dans deux logements 28a, 28b correspondants sur ledit contour externe inférieur 2a, ledit engagement permettant à l'ouverture d'entrée 26 de correspondre avec l'orifice d'extraction 25.

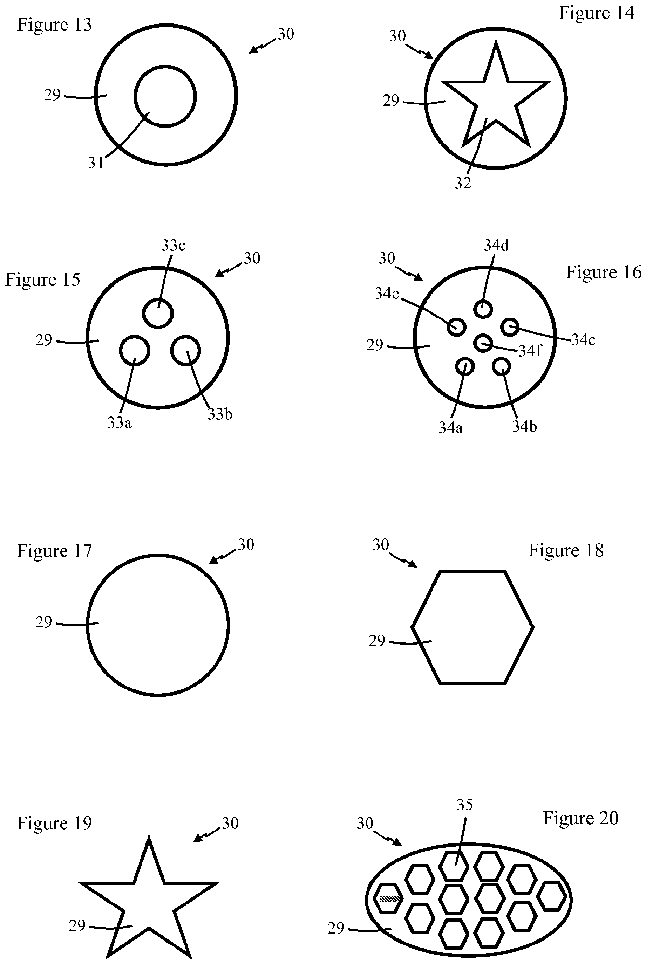

L'embout 7 comprend également une ouverture de sortie 29 par laquelle est extraite la préparation alimentaire glacée. Tel qu'illustré en figures 1 et 12, le conduit d'extraction 30 de l'embout 7 présente une section plus ou moins aplatie et incurvée. On peut toutefois envisager des variantes d'embout 7, comme illustré à titre d'exemple non limitatif sur les figures 13 à 20. Sur la figure 13, le conduit d'extraction 30 est circulaire et l'ouverture de sortie 29 présente une réduction circulaire 31. Sur la figure 14, le conduit d'extraction 30 est circulaire et l'ouverture de sortie 29 présente une réduction en étoile 32. Sur la figure 15, le conduit d'extraction 30 est circulaire et l'ouverture de sortie 29 comprend trois trous d'extraction 33a-33c de taille moyenne. Sur la figure 16, le conduit d'extraction 30 est circulaire et l'ouverture de sortie 29 comprend six trous d'extraction 34a-34f de petite taille. Sur la figure 17, le conduit d'extraction 30 est circulaire et l'ouverture de sortie 29 est de même diamètre que ledit conduit 30. Sur la figure 18, le conduit d'extraction 30 est de forme hexagonale et l'ouverture de sortie 29 a une section identique. Sur la figure 19, le conduit d'extraction 30 a une forme en étoile et l'ouverture de sortie 29 a une section identique. Sur la figure 20, le conduit d'extraction 30 a une forme ovale et l'ouverture de sortie 29 comprend des trous 35 de forme hexagonale, constituant plus ou moins une structure en nid d'abeille. Ces variantes permettent de modifier la texture de la préparation alimentaire glacée extraite en jouant notamment sur la pression exercée dans la chambre 8 et sur la durée de malaxage.

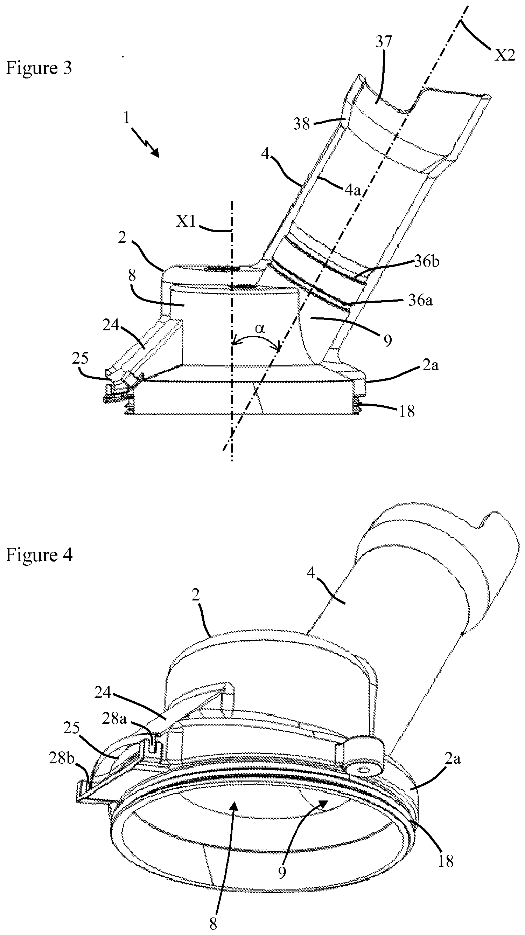

Tel qu'illustré en figures 2 et 3, le contour interne 4a de la goulotte 4 comprend deux bourrelets 36a, 36b circulaire agencés à proximité de l'orifice de sortie 9. Ces deux bourrelets 36a, 36b permettent de racler l'extrémité 6a du poussoir 6 durant son déplacement vis-à-vis de ladite goulotte 4, dans le sens de l'axe X2, notamment durant son extraction. Cela évite les remontées d'aliments glacés broyés par la goulotte 4. On pourrait envisager le remplacement de ces deux bourrelets 36a, 36b par un ou plusieurs joints (non illustrés). On pourrait également envisager leur mise en œuvre sur le contour externe 6b du poussoir au lieu du contour interne 4a de la goulotte 4. On constate sur ces figures 2 et 3 que la section de l'orifice d'entrée 37 de la goulotte 4 est supérieure à celle de l'orifice de sortie 9 du fait de la présence d'un chanfrein 38 sur ladite goulotte 4 permettant d'évaser légèrement le contour interne 4a au niveau dudit orifice d'entrée 37.

Tel qu'illustré sur la figure 11, l'extrémité 6a du poussoir 6 comprend deux faces 39a, 39b plus ou moins en équerre qui permettent de pousser les aliments congelés dans la goulotte 4. Ces faces 39a, 39b sont disposées de manière attenante aux lames 14a-14e durant la rotation du rotor 3, lorsque le poussoir 6 est complètement engagé dans la goulotte 4.

Tel qu'illustré en figures 1, 2 et 11, le poussoir 6 comprend également un chanfrein 40 permettant une augmentation de diamètre dans sa portion d'extrémité 6c. Cela permet audit chanfrein 40 du poussoir 6 de venir en butée contre le chanfrein 38 de la goulotte 4 de sorte à définir une position d'arrêt du poussoir 6 vis-à-vis de la goulotte 4 bien définie, empêchant les faces 39a, 39b d'entrer en contact avec les lames 14a-14e pour ne pas les endommager. On pourrait envisager d'autres variantes de système de butée entre la goulotte 4 et le poussoir 6, afin de définir une position d'arrêt bien définie entre lesdits éléments dans ce même but.

Lors de l'utilisation de l'appareil (non illustré) pour la réalisation d'une préparation alimentaire glacée, l'utilisateur met en place le dispositif 1 en fixant le socle 5 sur la base (non illustrée) de l'appareil, en accouplant ensuite le rotor 3 avec le système d'entraînement (non illustré) accessible par l'ouverture 23 sur ce socle 5, puis en vissant le boîtier 2 sur ledit socle 5, le rotor 3 étant alors logé dans la chambre 8. L'utilisateur met en marche l'appareil puis insère des aliments congelés dans la goulotte 4 et pousse lesdits aliments au moyen de va-et-vient avec le poussoir 6. Les aliments glacés sont alors broyés par les lames 14a-14e en équerre sur les deux faces 12a, 12b du rotor 3, le broyage glacé se répartissant dans la chambre 8 autour du rotor 3 où il est malaxé et extrait progressivement par l'embout 7. Une fois la préparation alimentaire glacée terminée, le dispositif 1 peut être démonté entièrement pour son nettoyage. Les caractéristiques du dispositif 1 décrites précédemment, à titre non limitatif, permettent avantageusement son adaptation sur une base d'un appareil permettant la réception d'autres accessoires de mélange et de mixage d'aliments non congelés. Un tel appareil peut être notamment constitué d'un mélangeur du type Blender dont la conception est bien connue de l'homme du métier, raison pour laquelle ledit appareil n'est pas décrit en détail ci-avant. Il suffira d'adapter le dispositif 1 à l'appareil, sans sortir du cadre de l'invention, notamment pour la fixation amovible du socle 5 sur la base (non illustrée) et pour l'engagement du rotor 3 avec le système d'entraînement en rotation (non illustré) sur cette base. La description qui précède n'a aucun caractère limitatif. De nombreuses variantes pourront être envisagées dans la portée des revendications, notamment quant à l'inclinaison de la goulotte vis-à-vis de l'axe de rotation X1 du rotor 3 et des organes de broyage. On peut également envisager d'autres formes de lames, avec ou sans dents.

L'invention trouvera par exemple son application pour la préparation de crèmes glacées.

## Revendications

1. Dispositif (1) pour la réalisation de préparations alimentaires glacées comprenant un boîtier (2) et un rotor (3), le boîtier étant configuré pour recevoir le rotor et définir une chambre d'homogénéisation (8) autour du rotor, ledit rotor étant configuré pour être entraîné en rotation dans le boîtier selon un axe de rotation (X1), **caractérisé en ce que** le rotor comprend deux faces (12a, 12b) sécantes comprenant chacune un organe de broyage (14a-14e) agencé en saillie, ledit dispositif comprenant une goulotte d'acheminement (4) comprenant un orifice de sortie (9) configuré pour déboucher simultanément sur les deux faces sécantes du rotor dans la chambre d'homogénéisation.

2. Dispositif (1) selon la revendication 1, dans lequel l'organe de broyage sur chaque face (12a, 12b) est constitué d'au moins une lame (14a-14e) assujettie à ladite face.

3. Dispositif (1) selon la revendication 2, dans lequel l'organe de broyage comprend des dents (15) portées par l'au moins une lame (14a-14e).

4. Dispositif (1) selon l'une des revendications précédentes, dans lequel l'orifice de sortie (9) débouche sur une face terminale (12a) et sur une face latérale (12b) du rotor (3).

5. Dispositif (1) selon la revendication 4, dans lequel le rotor (3) est cylindrique et comporte un axe de révolution confondu avec son axe de rotation (X1), la face terminale (12a) étant constituée par la surface d'extrémité perpendiculaire à l'axe de révolution et la face latérale (12b) étant constituée par la surface périphérique cylindrique.

6. Dispositif (1) selon l'une des revendications précédentes, dans lequel le rotor (3) comprend un système d'accouplement (16) configuré pour coopérer avec un système d'entraînement en rotation sur une base d'un appareil pour la réalisation de préparations alimentaires glacées.

7. Dispositif (1) selon la revendication 6, lequel comprend un système de fixation (21a, 21b) configuré pour coopérer avec un système de fixation complémentaire sur ladite base de l'appareil et permettre un assemblage amovible entre lesdits éléments.

8. Dispositif (1) selon l'une des revendications précédentes, dans lequel l'axe de rotation (X1) du rotor (3) est agencé verticalement.

9. Dispositif (1) selon l'une des revendications précédentes, dans lequel la goulotte d'acheminement (4) est agencée de manière oblique par rapport à l'axe de rotation (X1) du rotor (3).

10. Dispositif (1) selon l'une des revendications précédentes, lequel comprend un conduit d'extraction (24, 7) de la préparation alimentaire glacée, le conduit d'extraction étant configuré pour communiquer avec la chambre d'homogénéisation (8).

11. Dispositif (1) selon l'une des revendications précédentes, lequel comprend un poussoir (6) configuré pour être engagé dans la goulotte d'acheminement (4).

12. Dispositif (1) selon la revendication 11, lequel comprend un système de raclage (36a, 36b) agencé entre la goulotte d'acheminement (4) et le poussoir (6).

13. Appareil pour la réalisation de préparations alimentaires glacées, lequel comprend une base munie d'un système d'entraînement en rotation et un dispositif (1) selon l'une des revendications 6 à 12, le système d'entraînement en rotation permettant l'entraînement en rotation du rotor (3) selon son axe de rotation (X1).

## Patentansprüche

1. Vorrichtung (1) zur Herstellung von gefrorenen Lebensmittelzubereitungen, umfassend ein Gehäuse (2) und einen Rotor (3), wobei das Gehäuse konfiguriert ist, um den Rotor aufzunehmen und eine Homogenisierungskammer (8) um den Rotor herum zu definieren, wobei der Rotor konfiguriert ist, um in dem Gehäuse gemäß einer Drehachse (X1) in Drehung versetzt zu werden, **dadurch gekennzeichnet, dass** der Rotor zwei schneidende Flächen (12a, 12b) umfasst, die jeweils ein hervorstehend angeordnetes Zerkleinerungsteil (14a-14e) umfassen, wobei die Vorrichtung eine Zuführrinne (4) umfasst, die eine Ausgangsöffnung (9) umfasst, die konfiguriert ist, um gleichzeitig in die zwei schneidenden Flächen des Rotors in der Homogenisierungskammer zu münden.

2. Vorrichtung (1) nach Anspruch 1, wobei das Zerkleinerungsteil auf jeder Fläche (12a, 12b) aus mindestens einer der Fläche zugeordneten Klinge (14a-14e) besteht.

3. Vorrichtung (1) nach Anspruch 2, wobei das Zerkleinerungsteil Zinken (15) umfasst, auf von der mindestens einen Klinge (14a-14e) getragen werden.

4. Vorrichtung (1) nach einem der vorstehenden Ansprüche, wobei die Ausgangsöffnung (9) in eine Stirnfläche (12a) und in eine Seitenfläche (12b) des Rotors (3) mündet.

5. Vorrichtung (1) nach Anspruch 4, wobei der Rotor (3) zylindrisch ist und eine mit seiner Drehachse (X1) zusammenfallende Umdrehungsachse umfasst, wobei die Stirnfläche (12a) aus der Endoberfläche senkrecht zur Umdrehungsachse besteht und die Seitenfläche (12b) aus der zylindrischen Umfangsoberfläche besteht.

6. Vorrichtung (1) nach einem der vorstehenden Ansprüche, wobei der Rotor (3) ein Koppelsystem (16) umfasst, das konfiguriert ist, um mit einem Drehantriebssystem auf einem Sockel einer Einrichtung zur Herstellung von gefrorenen Lebensmittelzubereitungen zusammenzuwirken.

7. Vorrichtung (1) nach Anspruch 6, die ein Befestigungssystem (21a, 21b) umfasst, das konfiguriert ist, um mit einem komplementären Befestigungssystem auf dem Sockel der Einrichtung zusammenzuwirken und einen abnehmbaren Zusammenbau zwischen den Teilen zu ermöglichen.

8. Vorrichtung (1) nach einem der vorstehenden Ansprüche, wobei die Drehachse (X1) des Rotors (3) vertikal angeordnet ist.

9. Vorrichtung (1) nach einem der vorstehenden Ansprüche, wobei die Zuführrinne (4) in Bezug auf die Drehachse (X1) des Rotors (3) schräg angeordnet ist.

10. Vorrichtung (1) nach einem der vorstehenden Ansprüche, die eine Entnahmeleitung (24, 7) der gefrorenen Lebensmittelzubereitung umfasst, wobei die Entnahmeleitung konfiguriert ist, um mit der Homogenisierungskammer (8) zu kommunizieren.

11. Vorrichtung (1) nach einem der vorstehenden Ansprüche, die einen Stößel (6) umfasst, der konfiguriert ist, um in die Zuführrinne (4) einzugreifen.

12. Vorrichtung (1) nach Anspruch 11, die ein Abschabesystem (36a, 36b) umfasst, das zwischen der Zuführrinne (4) und dem Stößel (6) angeordnet ist.

13. Einrichtung zur Herstellung von gefrorenen Lebensmittelzubereitungen, die einen mit einem Drehantriebssystem ausgestatteten Sockel und eine Vorrichtung (1) nach einem der Ansprüche 6 bis 12 umfasst, wobei das Drehantriebssystem den Drehantrieb des Rotors (3) gemäß seiner Drehachse (X1) ermöglicht.

## Claims

1. Device (1) for producing iced food preparations, comprising a casing (2) and a rotor (3), the casing being configured to receive the rotor and to define a homogenisation chamber (8) around the rotor, said rotor being configured to be driven in rotation in the casing about an axis of rotation (XI), **characterised in that** the rotor comprises two secant faces (12a, 12b) each comprising a protruding grinding member (14a-14e), said device comprising a guide chute (4) comprising an outlet orifice (9) configured to open out simultaneously on the two secant faces of the rotor in the homogenisation chamber.

2. Device (1) according to claim 1, wherein the grinding member on each face (12a, 12b) is constituted of at least one blade (14a-14e) subjected to said face.

3. Device (1) according to claim 2, wherein the grinding member comprises teeth (15) carried by the at least one blade (14a-14e).

4. Device (1) according to one of the preceding claims, wherein the outlet orifice (9) opens out on an end face (12a) and on a side face (12b) of the rotor (3).

5. Device (1) according to claim 4, wherein the rotor (3) is cylindrical and comprises an axis of revolution combined with its axis of rotation (XI), the end face (12a) being constituted by the end surface perpendicular to the axis of revolution and the side face (12b) being constituted by the cylindrical peripheral surface.

6. Device (1) according to one of the preceding claims, wherein the rotor (3) comprises a coupling system (16) configured to engage with a system for driving in rotation on a base of an apparatus for producing iced food preparations.

7. Device (1) according to claim 6, which comprises an attachment system (21a, 21b) configured to engage with a complementary attachment system on said base of the apparatus and to allow a removable assembly between said elements.

8. Device (1) according to one of the preceding claims, wherein the axis of rotation (XI) of the rotor (3) is arranged vertically.

9. Device (1) according to one of the preceding claims, wherein the guide chute (4) is arranged obliquely with respect to the axis of rotation (X1) of the rotor (3).

10. Device (1) according to one of the preceding claims, which comprises an extraction conduit (24, 7) for the iced food preparation, the extraction conduit being configured to communicate with the homogenisation chamber (8).

11. Device (1) according to one of the preceding claims, which comprises a pushbutton (6) configured to be engaged in the guide chute (4).

12. Device (1) according to claim 11, which comprises a scraping system (36a, 36b) arranged between the guide chute (4) and the pushbutton (6).

13. Apparatus for producing iced food preparations, which comprises a base provided with a system for driving in rotation and a device (1) according to one of claims 6 to 12, the system for driving in rotation allowing the driving in rotation of the rotor (3) about its axis of rotation (XI).
